Europäisches Patentamt

(19) European Patent Office

Office européen des brevets

(11) Numéro de publication: **0 091 363**
**A2**

## (12) DEMANDE DE BREVET EUROPEEN

(21) Numéro de dépôt: 83400655.3

(22) Date de dépôt: 29.03.83

(51) Int. Cl.³: **H 04 N 5/22**

(30) Priorité: 05.04.82 US 365775

(43) Date de publication de la demande:
12.10.83 Bulletin 83/41

(84) Etats contractants désignés:
BE DE FR GB NL

(71) Demandeur: THOMSON-CSF
173, Boulevard Haussmann
F-75379 Paris Cedex 08(FR)

(72) Inventeur: Rahman, Atlaf
THOMSON-CSF SCPi 173, bld Haussmann
F-75379 Paris Cedex 08(FR)

(74) Mandataire: Turièque, Clotilde et al,
THOMSON-CSF SCPI 173, Bld Haussmann
F-75379 Paris Cedex 08(FR)

(54) Dispositif générateur de fonds d'images vidéo.

(57) L'invention concerne les générateurs vidéo utilisés pour générer un fond d'images sur lequel est incrusté un programme vidéo, ou un titrage, par exemple. Ce fond peut comporter jusqu'à 16 éléments rectangulaires superposés, dont les couleurs et les niveaux d'incrustation sont réglables.

Le dispositif comporte principalement une mémoire horizontale (110) constituée de 16 modules correspondant respectivement aux 16 éléments de fond; une mémoire verticale (210) constituée de 16 modules correspondant aux 16 éléments de fond; chaque élément du fond d'images est repéré par les coordonnées de deux angles diagonalement opposés, coordonnées qui sont stockés sous la forme d'un bit de la mémoire horizontale et d'un bit de la mémoire verticale. Des bascules (101 à 116) permettent de détecter et de mémoriser le début et la fin d'un élément sur une ligne, et des bascules (201 à 216) permettent de détecter et de mémoriser le début et la fin d'un élément dans la direction verticale. Une mémoire (500) stocke les caractéristiques des 16 éléments d'un fond, et les restitue, au fur et à mesure du balayage, en fournissant celles de l'élément le plus prioritaire.

Application à la production de programmes vidéo et de programmes de télévision.

./...

EP 0 091 363 A2

Fig.1

1

# Dispositif générateur de fonds d'images vidéo.

Cette invention a trait à un dispositif générateur élaborant des signaux vidéo représentant un fond d'images vidéo, les caractéristiques vidéo de ce fond étant choisies par un opérateur.

Au cours des dernières années les appareils générateurs de signaux vidéo sont devenus très complexes et peuvent actuellement comporter des systèmes, élaborant divers types de présentations graphiques, gérés par l'opérateur et pouvant être éventuellement utilisés tels quels ou, par exemple, avec un programme vidéo incrusté. Les matériels vidéo modernes de représentation graphique peuvent élaborer des fonds d'image, des caractères, des symboles, et autres représentations graphiques, possédant des dimensions, des formes, et des couleurs choisies par l'opérateur. En dépit des avantages évidents qu'assure un matériel aussi compliqué, le nombre potentiel de leurs utilisateurs est nécessairement limité par le coût, qui va de pair avec une complexité croissante.

Une des caractéristiques particulièrement avantageuse de ce genre de système est la possibilité d'élaborer, avec une grande souplesse d'emploi, des fonds d'image vidéo dont les dimensions, les emplacements, et les couleurs sont choisis par l'opérateur. La forme la plus courante des éléments composant un fond d'images est un rectangle dont les côtés sont parallèles aux directions du balayage de l'image. Un fond est composé par exemple d'une ou de plusieurs bandes ou encadrements dont le fond est en couleurs et sur lesquels sont superposés des titrages de télévision ou une autre information graphique. On peut aussi, en combinant un ou plusieurs fonds d'image rectangulaires, obtenir différents types de présentations graphiques. Un des objets de la présente invention est un dispositif numérique générant ce type de fonds d'images vidéo, en assurant une exploitation polyvalente, et dont le coût de mise en oeuvre est relativement modique.

Selon l'invention un dispositif générateur de fonds d'images vidéo, où chaque fond d'images est constitué d'éléments rectangulaires dont les côtés sont respectivement parallèles aux deux directions de balayage des images et dont le nombre est au plus égal à un nombre E fixé, est caractérisé en ce qu'il comporte :

- une mémoire, dite mémoire horizontale, comportant un nombre E de modules-mémoires, chaque module ayant un nombre d'emplacements-mémoires binaires égal au nombre de points par ligne d'images pour stocker des données repérant les coordonnées horizontales des côtés verticaux de l'un des éléments d'un fond d'images ;

- une mémoire (210), dite mémoire verticale, comportant un nombre E de modules-mémoires, chaque module ayant un nombre d'emplacements-mémoires binaires égal au nombre de lignes par image, pour stocker les données repérant les coordonnées verticales des côtés horizontaux de l'un des éléments d'un fond ;

- une mémoire, dite mémoire des caractéristiques, pour stocker les caractéristiques vidéo de chaque élément d'un fond ;

- des moyens pour écrire dans ces trois mémoires, pendant l'intervalle de temps séparant le balayage de deux images, des données choisies par un opérateur ;

- des moyens pour lire séquentiellement dans la mémoire horizontale le contenu de tous les emplacements-mémoires de chaque module, en synchronisme avec le balayage de chaque ligne d'image, les E modules étant lus en parallèle ;

- des moyens pour lire séquentiellement dans la mémoire verticale le contenu de tous les emplacements-mémoires de chaque module, en synchronisme avec le balayage vertical des images, les E modules étant lus en parallèle ;

- des moyens détecteurs de coïncidences couplés à des sorties des mémoires verticale et horizontale, détectant la coïncidence des données qui repèrent les coordonnées des côtés verticaux et des données qui repèrent les coordonnées des côtés horizontaux de chaque élément, pour générer, pour chaque élément, un signal logique, dit de coïncidence, pendant les intervalles de temps où le balayage des images parcourt la surface correspondant à chaque élément d'un fond ;

- des moyens, pour incruster une image vidéo sur un fond généréé par le dispositif selon l'invention, en combinant le signal vidéo de cette image et un signal vidéo constitué à partir des caractéristiques lues dans la mémoire des caractéristiques, sous la commande du signal de coïncidence correspondant à chacun des E éléments.

Un autre objet de la présente invention est un générateur numérique de fonds d'images vidéo, simple et peu coûteux, pour les systèmes de télévision où chaque image comporte deux trames entrelacées, tel que, par exemple, celui de type NTSC (National Television System Committee).

Les autres caractéristiques et avantages de l'invention deviendront apparents en lisant la description qui suit et en consultant les dessins ci-joints.

La figure 1 représente le schéma synoptique d'un générateur de fonds d'images conforme à l'un des modes de réalisation de la présente invention.

La figure 2 représente un exemple de fond d'images généré par un dispositif générateur selon l'invention, et illustre le fonctionnement de celui-ci.

La figure 3 représente un schéma synoptique plus détaillé d'une partie du générateur représenté par la figure 1.

Les figures 4A et 4B représentent des formes d'ondes de signaux illustrant le fonctionnement du dispositif représenté sur la figure 3.

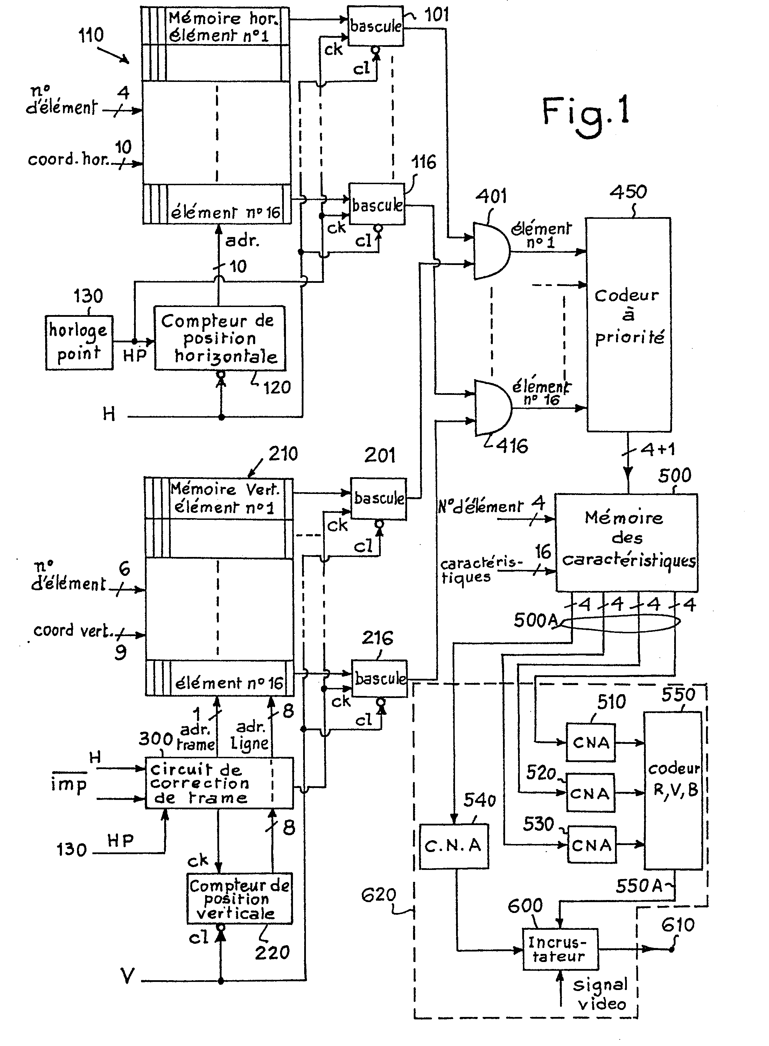

La figure 1 représente le schéma synoptique d'un exemple de réalisation permettant de générer un fond comportant jusqu'à 16 éléments rectangulaires, chaque élément possédant des caractéristiques vidéo choisies par l'opérateur. Le dispositif selon l'invention est, en l'espèce, utilisé en liaison avec une installation destinée à élaborer des signaux vidéo, par exemple une installation de production vidéo ou de production de télévision. Il est supposé qu'un programme vidéo est en cours de production, par des moyens non représentés, en liaison avec des signaux d'horloge classiques, constitués de signaux de commande et de signaux de synchronisation verticale et horizontale. Il est également supposé que c'est le système vidéo NTSC, à deux trames entrelacées par image, qui est utilisé. Naturellement l'invention est applicable à d'autres types de systèmes vidéo.

Une horloge 130, dite horloge point, fonctionnant à une cadence définissant un élément fondamental d'image, est représentée sur la figure 1, bien qu'elle puisse faire partie de l'installation vidéo de base. Il est également supposé que des dispositifs classiques d'entrée des données, tels que : clavier, moniteur, générateur de curseur, et numériseur graphique (aucun de ceux-ci n'étant représenté), sont normalement prévus.

Le mode de réalisation représenté comporte une mémoire binaire horizontale 110 et une mémoire binaire verticale 210, à accès aléatoire. La mémoire binaire horizontale 110 comporte seize modules-mémoires de 1024 x 1 bit, soit un module pour chaque élément d'un fond d'images vidéo. Chaque module comporte 1 024 emplacements mémorisant un bit, l'adresse de chaque emplacement de mémoire est constitué d'un mot binaire de dix bits. Quatre bits supplémentaires permettent de choisir l'un quelconque des seize modules.

La mémoire binaire verticale 210 comporte 16 modules de 512 x 1 bit, soit un module pour chacun des éléments d'un fond d'images vidéo. Chaque module de la mémoire 210 comporte 512 emplacements de mémoire à un bit, l'adresse d'un emplacement de mémoire étant définie par un mot binaire de 9 bits. Comme pour la mémoire 110, quatre bits supplémentaires sont utilisés pour choisir l'un quelconque des seize modules.

Les mémoires binaires verticales et horizontales sont chargées pendant la suppression verticale du faisceau c'est-à-dire pendant les intervalles de temps où elles ne sont pas utilisées en lecture pour générer un fond d'images. L'opérateur choisit un numéro, compris entre 1 et 16, pour chaque élément rectangulaire devant constituer le fond. Ce numéro est désigné par l'opérateur au moyen d'un clavier (non représenté). L'opérateur choisit la position de l'élément en désignant les coordonnées horizontales et verticales de deux points situés au sommet de deux angles, diagonalement opposés, de l'élément à élaborer. Ces coordonnées sont choisies par un clavier ou un générateur de curseurs (non représenté). Des sous-ensembles permettant de rentrer les coordonnées en utilisant un clavier, ou encore en utilisant un curseur, sont bien connus en informatique. On peut consulter, par exemple, le brevet US n° 3 740 743 où l'on trouvera une description du chargement de mémoires au cours de la suppression verticale du faisceau dans un système graphique vidéo. Dans le mode de réalisation de la figure 1, les quatre bits repérés "n° d'élément" représentent le numéro attribué à l'élément par l'opérateur, les dix bits repérés "coord.ho." représentent la coordonnée horizontale choisie par l'opérateur. Les neuf bits repérés "cood.ver." représentent la coordonnée verticale choisie par l'opérateur. Ces coordonnées constituent des adresses d'écriture pour inscrire un 1 dans deux emplacements de la mémoire horizontale 110 et dans deux emplacements de la mémoire horizontale, aux emplacements correspondant aux angles diagonalement opposés du rectangle à générer.

Par contre, pendant le balayage des images vidéo, les emplacements de la mémoire binaire horizontale 110 et de la mémoire binaire verticale 210 sont lus séquentiellement. Une suite d'adresses de lecture, pour la mémoire binaire horizontale 110, est fournie par un compteur de position horizontale 120 qui compte les impulsions HP provenant de l'horloge point 130. Au début de chaque ligne de balayage, le compteur de position horizontale 120 est remis à zéro par un signal H de synchronisation horizontale. Le compteur 120 commence alors à compter les impulsions provenant de l'horloge point 130, et sa sortie 120 fournit un nombre compris entre 0 et 1023, désignant la position horizontale instantanée du balayage de l'image vidéo. La sortie du compteur 120 fournit une adresse codée par 10 bits, qui est utilisée pour adresser, en parallèle, les seize modules de la mémoire horizontale 110. A titre d'exemple, lorsque la sortie du compteur de position horizontale 120 fournit "0000001100" (soit douze en notation décimale), l'accès est donné au douzième emplacement de chaque module de la mémoire binaire horizontale 110, et leur contenu est lu en parallèle.

Pendant le balayage des images les 16 modules de la mémoire binaire verticale 210 sont lus, en parallèle, à une adresse fournie par un circuit de correction de trame 300. Cette adresse est codée par neuf bits correspondant au numéro de la ligne parcourue par le balayage de l'image vidéo. Un compteur de lignes 220, à huit bits, est remis à zéro par un signal de suppression verticale V appliqué à l'entrée cl, puis est actionné par un signal d'horloge appliqué sur son entrée ck. Ce signal d'horloge est généré par le circuit logique de correction de trame 300, à partir du signal de synchronisation horizontale H. La sortie du compteur de lignes 220 fournit huit bits pouvant désigner jusqu'à 256 lignes visibles, par trame vidéo. Ces huit bits sont fournis au circuit logique de correction de trame 300, qui reçoit aussi le signal de synchronisation horizontale H, et un signal logique $\overline{imp}$ indiquant si la trame en cours de balayage est impaire ou paire. La sortie du circuit logique de correction de trame 300 fournit une adresse constituée de neuf bits : huit bits ("adr.ligne"), qui sont fournis par le compteur 220, désignent l'une des 256 lignes de la trame paire ou de la trame impaire, et un bit supplémentaire constitue une adresse de trame ("adr.trame"). Cette adresse de neuf bits sert à lire, en parallèle, un emplacement de chaque module de la mémoire verticale 210. L'ensemble des 512 emplacements est lu pendant une durée correspondant au balayage d'une seule trame d'image. Le circuit logique de correction de trame 300 fonctionne d'une façon particulière qui sera décrite plus en détail par la suite.

Les données repérant les coordonnées horizontales et les coordonnées verticales des côtés verticaux et des côtés horizontaux d'un élément sont très simples puisqu'elles ne sont constituées que de 4 bits, elles ne nécessitent donc qu'une faible capacité de mémoire.

Pour générer, à chaque instant, un signal vidéo correspondant à un élément de fond il est prévu des moyens détecteurs de coïncidences permettant de générer, pour chacun des 16 éléments, un signal logique, dit de coïncidence, élaboré à partir des données stockées dans les mémoires 110 et 210, et indiquant que la surface d'image correspondant à tel ou tel élément est en cours de balayage. Ces moyens détecteurs de coïncidences comportent des bascules permettant de mémoriser la détection du commencement d'un élément puis la détection de la fin de cet élément, d'une part dans la direction horizontale et d'autre part dans la direction verticale. Des portes logiques permettent de générer un signal de coïncidence lorsque la présence d'un élément est détectée simultanément dans les deux directions. Les sorties des 16 modules de la mémoire horizontale 110 sont respectivement reliées aux entrée de donnée de 16 bascules, 101 à 116, alors que les 16 sorties des modules de la mémoire horizontale 110 sont respectivement reliées aux entrées de données de 16 bascules, 201 à 216. Les bascules 101 à 116 et 201 à 216 peuvent être constituées par des bascules de type JK ; les entrées J et K de chaque bascule étant reliées ensemble et constituant l'entrée de données. Les bascules 201 à 216 sont

0091363

7

remises à zéro au moyen du signal de suppression verticale V. Les bascules 101 à 116 sont remises à zéro par le signal de synchronisation horizontale H. Les bascules 101 à 106 reçoivent, sur une entrée d'horloge ck, les impulsions HP provenant de l'horloge point 130 ; les bascules 201 à 216 reçoivent, sur une entrée d'horloge ck, un signal d'horloge provenant du circuit logique de correction de trame 300. Les sorties des bascules 101 et 201 sont respectivement reliées à deux entrées d'une porte ET 401, à deux entrées et une sortie. De même les paires de bascules correspondant à chacun des 16 modules de la mémoire 110 et des 16 modules de la mémoire 120 sont reliées respectivement à deux entrées d'une porte ET, de sorte qu'il y a seize portes ET, 401 à 416. Les seize sorties des portes ET, 401 à 416, sont reliées respectivement à 16 entrées d'un circuit codeur à priorité 450. Le codeur 450 est constitué, par exemple, par deux circuits codeurs n° 74148, de la Société "Texas Instruments" montés en cascade. La sortie du circuit codeur 450 fournit quatre bits indiquant le numéro de l'entrée ayant la plus haute priorité, parmi les entrées du codeur 450 qui reçoivent un niveau 1 à un instant considéré. Un bit supplémentaire indique si aucune des entrées du codeur 450 n'est au niveau 1, c'est-à-dire si toutes les sorties des portes ET, 401 à 416, sont au niveau 0.

Une mémoire 500, dite mémoire des caractéristiques, constituée d'une mémoire à accès aléatoire, stocke les caractéristiques vidéo de chacun des 16 éléments qui constituent un fond d'images. Dans le présent mode de réalisation, la mémoire 500 comporte seize emplacements de mémoire, chacun d'eux contenant seize bits. Pour chaque élément d'un fond d'images quatre bits représentent la valeur d'une composante vidéo rouge, quatre bits représentent la valeur d'une composante vidéo bleue, quatre bits représentent la valeur d'une composante vidéo verte, et quatre bits représentent un niveau d'incrustation. Ces caractéristiques ont été choisies par un opérateur, puis ont été inscrites dans la mémoire 500 à une adresse constituée par le numéro de l'élément ayant ces caractéristiques. Ce chargement des caractéristiques vidéo d'un élément est mis en oeuvre en liaison avec le chargement, par l'opérateur, des coordonnées qu'il a choisies pour définir la position de l'élément de fond d'images.

8

Les cinqs bits fournis par le codeur à priorité 450 sont appliqués à des entrées d'adresse de lecture de la mémoire 500. Des sorties de la mémoire 500 fournissent 16 bits qui définissent les caractéristiques de élément de fond d'images dont le numéro est fourni par le codeur à priorité 450. L'élément dont le numéro à la valeur la plus grande, a priorité par rapport aux autres éléments qui lui sont éventuellement superposés. Les bits représentant les composantes vidéo : rouge, verte, et bleue, sont respectivement appliqués à des convertisseurs numériques-analogiques 510, 520 et 530, et les bits représentant le niveau d'incrustation sont appliqués à un convertisseur numérique-analogique 540. Les sorties des convertisseurs numériques-analogiques 510, 520 et 530 sont respectivement reliées à un classique codeur de couleurs 550, dont la sortie 550A est reliée à l'entrée "fond d'images" d'un incrustateur non additif 600. L'incrustateur 600 possède une entrée "premier plan d'image" recevant le signal vidéo d'un programme de télévision. La sortie du convertisseur numérique-analogique 540 est reliée à l'entrée "niveau d'incrustation" de l'incrustateur 600. Une borne de sortie 610, de l'incrustateur 600, constitue une borne de sortie du dispositif selon l'invention, et fournit un signal vidéo correspondant à une image constituée d'un programme incrusté sur un élément de fond, qui à un instant donné est défini par ses caractéristiques de couleurs, son niveau d'incrustation, et son niveau de priorité par rapport aux autres éléments du fond, qui lui sont superposés.

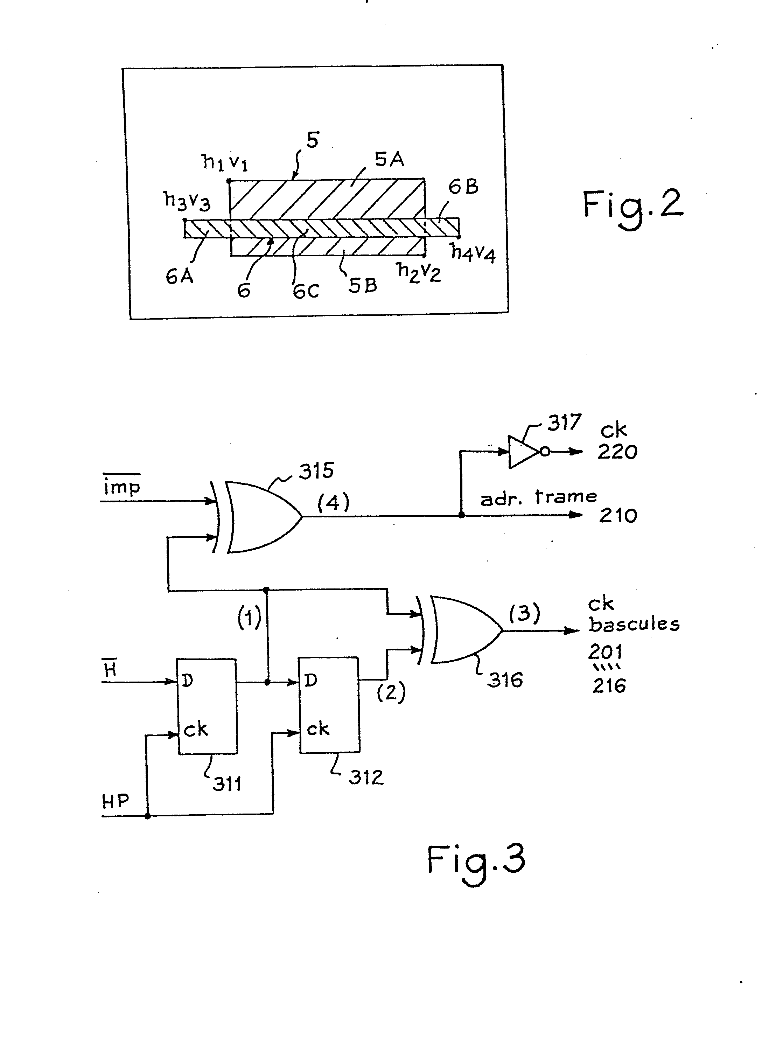

La figure 2 illustre le fonctionnement du mode de réalisation décrit à la figure 1, dans le cas où un élément (par exemple l'élément n° 1) est constitué d'un rectangle 5 ayant des angles, diagonalement opposés, de coordonnées $(h_1, v_1)$ et $(h_2, v_2)$ ; et où un élément à plus haute priorité, (par exemple l'élément n° 2) est constitué d'un rectangle 6 ayant des angles diagonalement opposés de coordonnées $(h_3, v_3)$ et $(h_4, v_4)$. Un opérateur charge le numéro, puis les coordonnées et les caractéristiques de ces éléments, au moyen d'un clavier (non représenté). Un "1" est inscrit aux adresses $h_1$ et $h_2$ du module n° 1 et aux adresses $h_3$ et $h_4$ du module n° 2 de la mémoire horizontale 110. Un "1" est inscrit aux adresses $v_1$ et $v_2$ du module n° 1 et aux adresses $v_3$ et $v_4$ du module n° 2 de la mémoire verticale 210. Lors de la lecture des mémoires 110 et 210, en synchronisme avec le balayage d'une image, la sortie de la bascule 101 passe au niveau 1 à l'instant où le balayage passe par le point de coordonnée horizontale $h_1$, quelle que soit la ligne en cours de balayage ; la sortie de la bascule 101 repasse au niveau 0 à l'instant où le balayage passe par le point de coordonnée horizontale $h_2$, quel que soit la ligne en cours de balayage. De même, la sortie de la bascule 201 passe au niveau 1 à l'instant où le balayage vertical passe par la ligne de coordonnée verticale $h_1$ et revient au niveau 0 à l'instant où le balayage vertical passe par la ligne de coordonnée verticale $h_2$. Le fonctionnement des bascules 102 et 202 est analogue pour les coordonnées $h_3$, $h_4$ et $v_3$, $v_4$. La sortie de la porte ET 401 passe donc au niveau 1 pendant les intervalles de temps où le rectangle 5 est balayé.

La sortie de la porte ET 402 passe au niveau 1 pendant les intervalles de temps où le rectangle 6 est balayé. Une partie, 6C, du rectangle 6 est superposée au rectangle 5. Le rectangle 5 comporte deux parties, 5A et 5B, situées hors du rectangle 6. Le rectangle 6 comporte deux parties, 6A et 6B situées hors du rectangle 5. Pendant le balayage des parties 5A et 5B, seule la sortie de la porte ET 401 est niveau 1, le codeur à priorité 450 fournit sur ses sorties un mot binaire désignant l'élément n° 1 et adressant la mémoire des caractéristiques 500. La mémoire des caractéristiques 500 fournit alors les caractéristiques du rectangle 5. Pendant le balayage des parties 6A et 6B, seule la sortie de la porte ET 402 est au niveau 1. Le codeur à priorité 450 fournit un mot binaire désignant l'élément n° 2 et adressant la mémoire des caractéristiques 500. La mémoire 500 fournit alors les caractéristiques du rectangle 6. Pendant le balayage de la partie 6C, qui est commune aux deux rectangles, les sorties des portes ET 401 et 402 sont simultanément au niveau 1. Le codeur à priorité 450 fournit un mot binaire désignant l'élément dont le numéro est le plus élevé, c'est-à-dire le n° 2. Ce numéro adresse la mémoire des caractéristiques 500, et celle-ci fournit les caractéristiques du rectangle 6. Le rectangle 6 apparaît donc superposé au rectangle 5 dans le fond des images obtenues. Naturellement le fonctionnement est analogue dans le cas où des éléments sont superposés en plus grand nombre.

10

La figure 3 représente un schéma synoptique d'un exemple de réalisation du circuit de correction de trames 300. Les images de télévision étant constituées, en général, de deux trames entrelacées, il est souhaitable que les éléments constituant un fond d'images puissent commencer ou finir indifféremment sur une ligne de la première ou de la seconde trame des images, sinon la possibilité de choix des coordonnées verticales serait diminuée de moitié. Il est donc nécessaire de lire dans la mémoire 210 les bits de valeur 1 correspondant à des points qui n'appartiennent pas à la trame en cours de balayage. Le dispositif de correction de trames 300 permet, pendant le balayage d'une trame quelconque, de détecter dans la mémoire 210 les bits de valeur 1 correspondant à des points appartenant à l'une quelconque des deux trames. Ceux correspondant aux points de la trame en cours de balayage sont détectés au fur et à mesure du balayage de chaque ligne, alors que ceux correspondant aux points de la trame non en cours de balayage sont détectés pendant la durée du retour du balayage horizontal entre chaque ligne.

Une bascule 311, de type D, reçoit sur une entrée d'horloge, ck, le signal HP, et reçoit sur une entrée de données D un signal $\overline{H}$, complémentaire du signal de synchronisation horizontale H. Une bascule 312, de type D, a une entrée de données D reliée à une sortie de la bascule 311, et a une entrée d'horloge, ck, recevant le signal HP. Une porte OU EXCLUSIF 315 possède une première entrée recevant le signal $\overline{imp}$, désignant la parité de la trame en cours, et une seconde entrée reliée à la sortie de la bascule 311. La sortie de la porte 315 est reliée à l'entrée d'adresse de lecture de la mémoire 310 à laquelle elle fournit un bit qui constitue un bit d'adresse de trame, et elle est reliée à un inverseur logique 317 qui fournit un signal d'horloge à l'entrée ck du compteur de position verticale 220. Une porte logique OU EXCLUSIF 316 possède une première et une seconde entrée reliées respectivement à la sortie de la bascule 311 et à la sortie de la bascule 312, et une sortie reliée à l'entrée d'horloge ck des bascules 201 à 216. Quand une trame en cours de balayage est impaire le signal $\overline{imp}$ est au niveau 0, la porte 315 transmet sans inversion le signal fournit par la sortie de la bascule 311. Quand la trame en cours de balayage est paire, le signal $\overline{imp}$ est au niveau 1, la porte 315 inverse le signal fournit par la sortie de la bascule 311, ce qui a pour effet d'inverser un bit d'adresse de trame, et d'inverser le sens de transition du signal d'horloge appliqué au compteur de position verticale 220, ce qui équivaut à décaler les instants de déclenchement de ce compteur. L'adresse de trame fournie par le circuit 300 à la mémoire 210, constitue le bit de poids le plus faible de l'adresse de lecture de la mémoire 210, donc une inversion du bit d'adresse de trame provoque un décalage d'une unité des adresses de lecture, correspondant à un décalage d'un emplacement de mémoire, c'est-à-dire un décalage d'une ligne d'image.

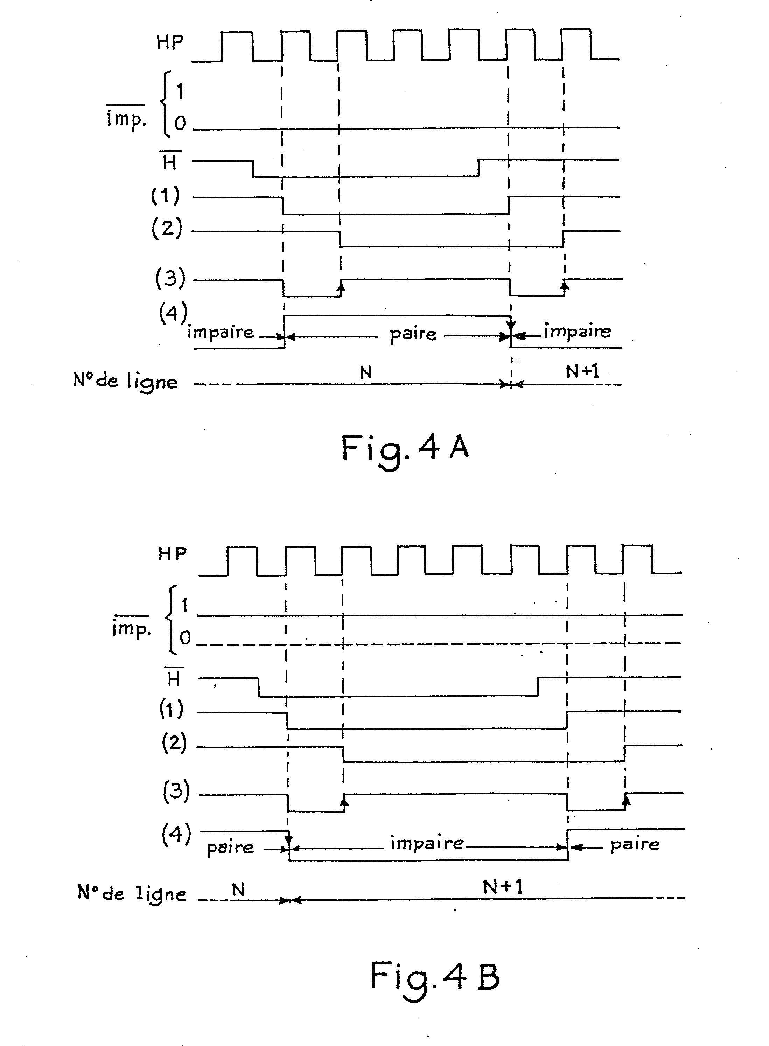

Les figures 4A et AB représentent des diagrammes temporels de signaux en différents points du circuit représenté sur la figure 3, au voisinage d'un instant séparant le balayage d'une ligne de n° N et le balayage d'une ligne de n° N+1 appartenant à une même trame. Cette trame est une trame impaire dans le cas de la figure 4A, et une trame paire dans le cas de la figure 4B. Quand le balayage d'une ligne d'image va commencer le signal $\overline{H}$, qui est le complément du signal de synchronisation horizontale, passe au niveau 0. Le front montant suivant de l'horloge point HP provoque le passage au niveau 0 des signaux (1) et (3), et le passage au niveau 1 du signal (4). Le signal (4), constituant le bit de moindre poids de l'adresse de lecture de la mémoire verticale 210, la lecture va être effectuée pour une ligne adjacente à la ligne n° N en cours de balayage, le contenu du compteur de position verticale 220 restant égal à N, car le compteur 220 ne sera déclenché que par le front descendant du signal (4). L'inverseur 317 permet de transformer les fronts descendants du signal (4) en fronts montants nécessaires pour le déclenchement du compteur 220. Le prochain front montant de l'horloge point HP provoque le passage au niveau 0 du signal (2), ce qui provoque le passage au niveau 1 du signal (3). Ce front montant du signal (3) provoque le déclenchement des bascules 201 à 216 dont l'entrée de données reçoit un bit de valeur 1.

Dans le cas du balayage d'une trame impaire (figure 4A) le front montant du signal (3) permet donc de détecter le commencement d'un élément de fond d'images éventuellement situé sur la ligne de n° N de la trame paire qui n'est pas en cours de balayage, c'est-à-dire commençant sur la ligne qui précède la ligne de n° N +1 de la trame impaire, ligne qui va être balayée à son tour. La détection du commencement d'un fond d'images est mémorisée par les bascules jusqu'à la détection, dans la trame paire ou la trame impaire, de la fin de cet élément. Le front montant du signal HP après le passage du niveau 0 au niveau 1 du signal $\overline{H}$, provoque le passage au niveau 1 du signal (1), et le passage au niveau 0 du signal (3). Le prochain front montant du signal HP provoque le passage au niveau 1 du signal (2) et du signal (3). Le front montant du signal (3) déclenche les bascules 201 à 206 pour mémoriser la détection du commencement ou de la fin d'un élément, commencement ou fin présent sur la ligne n° N+1 de la trame impaire.

La figure 4B illustre le fonctionnement du circuit représenté sur la figure 3 dans le cas où la trame en cours de balayage est une trame paire. Les signaux sont représentés au voisinage de l'instant où se termine le balayage de la ligne n° N, et où va commencer le balayage de la ligne n° N+1, de la trame paire. Le signal logique $\overline{imp}$ a la valeur 1, les signaux fournis par la sortie de la bascule 311 sont donc inversés par la porte 315. Les fronts montants et les fronts descendants du signal (4) sont donc inversés par rapport à la figure 4A : le front descendant, qui commande l'avancement du compteur 220, précède le front montant. Le premier front montant du signal de l'horloge point HP après le passage au niveau 0 du signal $\overline{H}$ provoque le passage au niveau 0 du signal (1) et du signal (3), comme dans le cas représenté sur la figure 4A, mais le signal (4) passe du niveau 1 au niveau 0. Le contenu du compteur 220 est donc augmenté d'une unité avant que le signal (3) repasse au niveau 1. Quand le prochain front montant du signal HP provoque la remontée du signal (3) l'adresse de lecture fournie à la mémoire 210 correspond donc à la ligne n° N+1 de la trame impaire car le bit d'adresse de trame a alors la valeur 0. Les bascules 201 à 216 détectent ainsi le commencement d'un élément de fond d'images éventuellement situé sur la ligne de n° N+1 de la trame impaire, qui n'est pas en cours de balayage, et mémorisent cette détection éventuelle pendant le balayage de la ligne de n° N+1 et des lignes suivantes de la trame paire, jusqu'à ce qu'il y ait détection dans la trame paire ou impaire de la fin de cet élément. Le front montant de l'horloge point HP qui suit le passage du niveau 0 au niveau 1 du signal $\overline{H}$ provoque le passage au niveau 1 du signal (1), le passage au niveau 0 du signal (3), et le passage au niveau 1 du signal (4). Le prochain front montant de l'horloge point HP provoque le passage au niveau 1 du signal (3), ce qui déclenche les bascules 201 à 216. Les bascules 201 à 216 mémorisent alors la détection du commencement ou de la fin d'un élément, commencement ou fin présent sur la ligne n° N+1 de la trame paire. Le circuit de correction de trame 300 permet donc bien de détecter le commencement ou la fin d'un élément de fond d'images situé sur une ligne qui précède, dans l'image, la ligne en cours de balayage et qui n'appartient donc pas à la même trame.

Naturellement, le dispositif de correction de trame 300 peut être supprimé si le dispositif selon l'invention est intégré à un système de télévision où les images ne sont pas analysées en deux trames entrelacées.

Il est à la portée de l'homme de l'art de réaliser différemment le dispositif selon l'invention, notamment en mémorisant d'une manière différente les coordonnées horizontales et verticales des côtés des éléments : il est possible de stocker des 1 dans tous les emplacements-mémoires situés entre ceux correspondant à un premier côté et à un second second côté opposé. Il n'est pas alors nécessaire de prévoir des bascules 101,..., 116, 201,..., 216, pour mémoriser la détection du commencement d'un élément.

14

## REVENDICATIONS

1. Dispositif générateur de fonds d'images vidéo, chaque fond d'images étant constitué d'éléments rectangulaires dont les côtés sont respectivement parallèles aux deux directions de balayage des images et dont le nombre est au plus égal à un nombre E fixé ; dispositif, caractérisé en ce qu'il comporte :

- une mémoire (110), dite mémoire horizontale, comportant un nombre E de modules-mémoires, chaque module ayant un nombre d'emplacements-mémoires binaires égal au nombre de points par ligne d'image, pour stocker des données repérant les coordonnées horizontales des côtés verticaux de l'un des éléments d'un fond d'images ;

- une mémoire (210), dite mémoire verticale, comportant un nombre E de modules-mémoires, chaque module ayant un nombre d'emplacements-mémoires binaires égal au nombre de lignes par image, pour stocker des données repérant les coordonnées verticales des côtés horizontaux de l'un des éléments d'un fond ;

- une mémoire (500), dite mémoire des caractéristiques, pour stocker les caractéristiques vidéo de chaque élément d'un fond ;

- des moyens pour écrire dans ces trois mémoires (110, 210, 500), pendant l'intervalle de temps séparant le balayage de deux images, des données choisies par un opérateur ;

- des moyens (130, 120) pour lire séquentiellement dans la mémoire horizontale (110) le contenu de tous les emplacements-mémoires de chaque module, en synchronisme avec le balayage de chaque ligne d'image, les E modules étant lus en parallèle ;

- des moyens (130, 220, 300) pour lire séquentiellement dans la mémoire verticale (210) le contenu de tous les emplacements-mémoires de chaque module, en synchronisme avec le balayage vertical des images, les E modules étant lus en parallèle ;

- des moyens détecteurs de coïncidences (101,..., 116, 201,...,216, 401,..., 416), couplés à des sorties des mémoires verticale (210) et horizontale (110), détectant la coïncidence des données qui repèrent les coordonnées des côtés verticaux et des données qui repèrent les coordonnées des côtés horizontaux de chaque élément, pour générer, pour chaque

0091363

15

élément, un signal logique, dit de coïncidence, pendant les intervalles de temps où le balayage des images parcourt la surface correspondant à chaque élément d'un fond ;

- des moyens (620), pour incruster une image vidéo sur un fond généré par le dispositif selon l'invention, en combinant le signal vidéo de cette image et un signal vidéo constitué à partir des caractéristiques lues dans la mémoire des caractéristiques (500), sous la commande du signal de coïncidence correspondant à chacun des E éléments.

2. Dispositif selon la revendication 1, caractérisé en ce que les données repérant les coordonnées horizontales des côtés verticaux d'un élément sont constituées des valeurs de deux bits, stockées dans deux emplacements-mémoires du module correspondant à cet élément dans la mémoire horizontale (110), à des adresses correspondant aux valeurs de ces coordonnées ; et en ce que les données repérant les coordonnées verticales des côtés horizontaux d'un élément sont constituées des valeurs de deux bits, stockées dans deux emplacements-mémoires du module correspondant à cet élément dans la mémoire verticale (210), à des adresses correspondant aux valeurs de ces coordonnées ;

et en ce que les moyens détecteurs de coïncidences comportent pour chacun des E éléments,

- une première bascule (101) couplée à une sortie d'un module de la mémoire horizontale (110) pour être déclenchée dans un sens par le bit repérant un premier côté vertical de cet élément et être déclenchée dans l'autre sens par le bit repérant un second côté vertical de ce même élément ;

- une seconde bascule (201) couplée à une sortie d'un module de la mémoire verticale (210) pour être déclenchée dans un sens par le bit repérant un premier côté horizontal de cet élément et être déclenchée dans l'autre sens par le bit repérant un second côté horizontal de ce même élément ;

- une porte (401) ayant une première et une seconde entrée couplées respectivement à des sorties de la première et de la seconde bascule (101 et 201), et ayant une sortie fournissant le signal de coïncidence lorsque ces deux bascules ont le même état logique.

3. Dispositif selon la revendication 1, où les E éléments composant un fond d'image peuvent être superposés, caractérisé en ce que le dispositif comporte, en outre, un codeur à priorité (450), dont les entrées reçoivent les signaux de coïncidence fournis par les moyens détecteurs de coïncidences (101,..., 116, 201,..., 216, 401, ...416), pour fournir un mot binaire désignant un élément prioritaire, lorsque plusieurs éléments d'un fond sont superposés ;

et en ce que ce mot binaire constitue une adresse pour lire dans la mémoire des caractéristiques (500) les caractéristiques vidéo de l'élément du fond.

4. Dispositif selon la revendication 1, pour générer des fonds d'images dans un système vidéo où les images sont constituées de deux trames entrelacées, caractérisé en ce que les moyens pour lire séquentiellement dans la mémoire verticale (210) le contenu de tous les emplacements-mémoires de chaque module, comportent un dispositif de correction de trame (300) fournissant :

- une adresse de lecture de la mémoire verticale (210) telle que la lecture de chaque emplacement-mémoire, correspondant à une ligne d'une trame, est précédée de la lecture de l'emplacement-mémoire correspondant à la ligne immédiatement précédente et appartenant à l'autre trame non en cours de balayage ;

- un signal d'horloge, aux moyens détecteurs de coïncidences (101 à 116, 201 à 216), tel que ceux-ci prennent en compte les données, repérant des côtés horizontaux, lues au cours de ces deux lectures.

0091363

Fig.1

Fig.2

Fig.3

0091363

3/3

Fig. 4 A

Fig. 4 B